# EUROPEAN PATENT APPLICATION

(11) **EP 4 564 585 A1**
(43) Date of publication of application: **04.06.2025**
(21) Application number: 23919474.9
(22) Date of filing: 05.12.2023
(51) Int. Cl.: H01M 50/533

(54) **BATTERY CELL ASSEMBLY, BATTERY, AND ELECTRONIC DEVICE**

(30) Priority: 31.01.2023 CN 202310093647
(71) Applicant: Honor Device Co., Ltd., Shenzhen, Guangdong 518040 (CN)
(72) Inventor: LI, Hongyang, Shenzhen, Guangdong 518040 (CN); ZHU, Hua, Shenzhen, Guangdong 518040 (CN); MEI, Qiaodi, Shenzhen, Guangdong 518040 (CN); LI, Xiaokai, Shenzhen, Guangdong 518040 (CN)
(74) Representative: Isarpatent
(86) International application number: PCT/CN2023/136380
(87) International publication number: WO 2024/159910

(57) **Abstract**

This application provides a battery cell assembly, a battery, and an electronic device, to reduce space occupation of a tab glue in a length direction of the battery after the tab glue is bent along with a tab, avoid space waste of the tab glue in the length direction, and facilitate improvement of a battery capacity. The battery cell assembly includes a battery cell and a first tab glue. The battery cell includes a battery cell body and a tab. The tab extends relative to the battery cell body. The tab includes a fixed tab portion and a bent tab portion. The fixed tab portion is fastened to the battery cell body, and the bent tab portion is fastened to an end that is of the fixed tab portion and that is away from the battery cell body. The first tab glue is provided on an inner side surface of the fixed tab portion, and an inner side surface of the bent tab portion is exposed relative to the first tab glue.

## Description

This application claims priority to Chinese Patent Application No. 202310093647.2, filed with the China National Intellectual Property Administration on January 31, 2023 and entitled "BATTERY CELL ASSEMBLY, BATTERY, AND ELECTRONIC DEVICE", which is incorporated herein by reference in its entirety.

### TECHNICAL FIELD

This application relates to the field of battery technologies, and in particular, to a battery cell assembly, a battery, and an electronic device.

### BACKGROUND

As an energy storage component that provides power to an electronic device, a battery is one of important electronic components in the electronic device. In a conventional pouch cell battery, a tab of a battery cell is often bent to facilitate being electrically connected to a protection circuit board. To ensure that the tab does not contact with another component to cause a short circuit, a surface of the tab is often coated with a tab glue. However, after being bent along with the tab, the tab glue occupies specific space in a length direction of the battery, causing space waste in the length direction of the battery. This is not conducive to improvement of a battery capacity.

### SUMMARY

This application provides a battery cell assembly, a battery, and an electronic device, to reduce space occupation of a tab glue in a length direction of the battery after the tab glue is bent along with a tab, avoid space waste of the tab glue in the length direction, and facilitate improvement of a battery capacity.

According to a first aspect, this application provides a battery cell assembly, including a battery cell and a first tab glue. The battery cell includes a battery cell body and a tab. The tab extends relative to the battery cell body. The tab includes a fixed tab portion and a bent tab portion. The fixed tab portion is fastened to the battery cell body, and the bent tab portion is fastened to an end that is of the fixed tab portion and that is away from the battery cell body. The first tab glue is provided on an inner side surface of the fixed tab portion, and an inner side surface of the bent tab portion is exposed relative to the first tab glue. In other words, the first tab glue is not provided on the inner side surface of the bent tab portion. In other words, a tab glue is not provided on the inner side surface of the bent tab portion.

When the battery cell assembly in this application is used in a battery, because the tab glue is not provided on the inner side surface of the bent tab portion, space occupation of the tab glue provided on a surface of the bent tab portion in a length direction of the battery can be reduced, thereby avoiding space waste of the battery in the length direction and facilitating improvement of a battery capacity. In addition, because the tab glue is not provided on the inner side surface of the bent tab portion, the bent tab portion can further be easily bent relative to the fixed tab glue, thereby facilitating improvement of assembly convenience of a battery.

The tab has a flattened state and a bent state. When the tab is in a flattened state, the bent tab portion is in a flattened state and is relatively flattened with the fixed tab portion. When the tab is in a bent state, the bent tab portion is in a bent state and is bent relative to the fixed tab portion.

In an implementation, the tab further includes an active tab portion, and the active tab portion is fastened to an end that is of the bent tab portion and that is away from the fixed tab portion. In other words, the bent tab portion is fastened between the fixed tab portion and the active tab portion. When the tab is in a flattened state, the active tab portion and the fixed tab portion as well as the active tab portion and the bent tab portion are relatively flattened. When the tab is in a bent state, the active tab portion is spaced apart and arranged opposite to the fixed tab portion, and the bent tab portion is also bent relative to the active tab portion.

In an implementation, the battery cell assembly further includes a second tab glue. The second tab glue is provided on an outer side surface of the fixed tab portion, and an outer side surface of the bent tab portion is exposed relative to the second tab glue. In other words, the second tab glue is not provided on the outer side surface of the bent tab portion. In other words, a tab glue is not provided on the outer side surface of the bent tab portion.

When the battery cell assembly in this application is used in a battery, because the tab glue is also not provided on the outer side surface of the bent tab portion, space occupation of the tab glue provided on a surface of the bent tab portion in a length direction of the battery can further be reduced, thereby avoiding space waste of the battery in the length direction and facilitating improvement of a battery capacity. In addition, because the tab glue is also not provided on the outer side surface of the bent tab portion, the bent tab portion can further be easily bent relative to the fixed tab glue, thereby facilitating improvement of assembly convenience of a battery.

In an implementation, the battery cell assembly further includes a second tab glue. The second tab glue is provided on an outer side surface of the fixed tab portion and an outer side surface of the bent tab portion. When the battery cell assembly is used in a battery, the second tab glue can effectively protect an exposed portion of the tab, thereby preventing the tab from contacting another component to cause a short circuit, and ensuring usage reliability of the battery.

In an implementation, the second tab glue includes a first glue portion and a second glue portion. The first glue portion is provided on the outer side surface of the fixed tab portion. The second glue portion is fastened to the first glue portion and is provided on the outer side surface of the bent tab portion. A left side surface of the second glue portion is flush with a left side surface of the bent tab portion, and a right side surface of the second glue portion is flush with a right side surface of the bent tab portion. In other words, the second glue portion does not have any projected portion relative to the left side surface and the right side surface of the bent tab portion. When the bent tab portion is bent relative to the fixed tab portion, the entire second glue portion is bent along with the bent tab portion. No excess portion of the second glue portion is raised relative to the bent tab portion and occupies space in the length direction of the battery. This can also effectively avoid space waste of the battery in the length direction and facilitate improvement of a battery capacity.

It should be noted that a qualifier such as "flush" and another relative positional relationship in embodiments of this application are all for the current process level, but not for absolute strict definitions in a mathematical sense. A small amount of deviation is allowed, and "approximately flush" is also acceptable. For example, that the left side surface of the second glue portion is flush with the left side surface of the bent tab portion means that the left side surface of the second glue portion is flush with or approximately flush with the left side surface of the bent tab portion. For example, the left side surface of the second glue portion may slightly project relative to the left side surface of the bent tab portion, or the left side surface of the second glue portion may be slightly retracted relative to the left side surface of the bent tab portion.

In an implementation, the first glue portion includes a first sub-glue portion and a second sub-glue portion. The first sub-glue portion is provided on the outer side surface of the fixed tab portion. A left side surface of the first sub-glue portion projects relative to a left side surface of the fixed tab portion, and/or a right side surface of the first sub-glue portion projects relative to a right side surface of the fixed tab portion.

The second sub-glue portion is fastened between the first sub-glue portion and the second glue portion, and is provided on the outer side surface of the fixed tab portion. A left side surface of the second sub-glue portion is flush with the left side surface of the fixed tab portion, and/or a right side surface of the second sub-glue portion is flush with the right side surface of the fixed tab portion.

The first glue portion may be in an inverted "T" shape.

In an implementation, the second tab glue includes a first glue portion and a second glue portion. The first glue portion is provided on the outer side surface of the fixed tab portion. The second glue portion is fastened to the first glue portion and is provided on the outer side surface of the bent tab portion. A width of the second glue portion gradually increases along a direction from the second glue portion to the first glue portion.

An included angle between a left side surface of the second glue portion and a left side surface of the bent tab portion is an acute angle, an included angle between a right side surface of the second glue portion and a right side surface of the bent tab portion is an acute angle, or a right side surface of the second glue portion is flush with a right side surface of the bent tab portion.

Alternatively, a right side surface of the second glue portion is flush with a right side surface of the bent tab portion, and an included angle between the right side surface of the second glue portion and the right side surface of the bent tab portion is an acute angle.

When the bent tab portion of the tab is bent relative to the fixed tab portion, the second glue portion is bent along with the bent tab portion. Because the second glue portion projects less from the left side surface and right side surface of the bent tab portion, no excess portion of the second glue portion is raised relative to the bent tab portion and occupies space in the length direction of the battery. This can effectively avoid space waste of the battery in the length direction and facilitate improvement of a battery capacity.

In an implementation, a width of the first glue portion gradually increases along the direction from the second glue portion to the first glue portion. A left side surface of the first glue portion projects relative to the left side surface of the fixed tab portion, and is flush with the left side surface of the second glue portion. A right side surface of the first glue portion projects relative to the right side surface of the fixed tab portion, and is flush with the right side surface of the second glue portion. The second tab glue is trapezoidal.

In an implementation, the left side surface of the first tab glue projects relative to the left side surface of the fixed tab portion, and/or the right side surface of the first tab glue projects relative to the right side surface of the fixed tab portion. The first tab glue is in a "straight-line" shape.

In an implementation, the first tab glue includes a first portion and a second portion. The first portion is provided on the inner side surface of the fixed tab portion. A left side surface of the first portion projects relative to the left side surface of the fixed tab portion, and/or a right side surface of the first portion projects relative to the right side surface of the fixed tab portion.

The second portion is fastened to a top side of the fixed tab portion and is provided on the inner side surface of the fixed tab portion. A left side surface of the second portion is flush with the left side surface of the fixed tab portion, and/or a right side surface of the second portion is flush with the right side surface of the fixed tab portion. The first tab glue is in an inverted "T" shape.

In an implementation, a quantity of tabs is two. Both the two tabs extend relative to the battery cell body and are spaced apart from each other. One is a positive tab and the other is a negative tab.

A quantity of first tab glues is two. The two first tab glues are respectively provided on inner side surfaces of two fixed tab portions, and inner side surfaces of bent tab portions are each exposed relative to the first tab glue.

In an implementation, the battery cell includes an electrode unit and a packaging film. The packaging film covers an outer surface of the electrode unit to package the electrode unit. The electrode unit includes a plurality of positive electrode sheets, a plurality of negative electrode sheets, and a plurality of separators. The plurality of positive electrode sheets and the plurality of negative electrode sheets are alternately stacked. Each separator is located between a positive electrode sheet and a negative electrode sheet. Each positive electrode sheet includes a positive tab portion, and positive tab portions of the plurality of positive electrode sheets are electrically connected to form the positive tab. Each negative electrode sheet includes a negative tab portion, and negative tab portions of the plurality of negative electrode sheets are electrically connected to form the negative tab.

In an implementation, a quantity of tabs is three. All the three tabs extend relative to the battery cell body and are arranged at intervals. The tabs are a positive tab, a negative tab, and a reference tab, respectively.

A quantity of first tab glues is three. The three first tab glues are respectively provided on inner side surfaces of three fixed tab portions, and inner side surfaces of the bent tab portions are each exposed relative to the first tab glue.

In an implementation, the battery cell includes an electrode unit and a packaging film. The packaging film covers an outer surface of the electrode unit to package the electrode unit. The electrode unit includes a plurality of positive electrode sheets, a plurality of negative electrode sheets, a plurality of reference electrode sheets, and a plurality of separators. The plurality of positive electrode sheets, the plurality of negative electrode sheets, and the plurality of reference electrode sheets are alternately stacked. Some of the separators are located between a positive electrode sheet and a negative electrode sheet, some of the separators are located between a positive electrode sheet and a reference electrode sheet, and some of the separators are located between a negative electrode sheet and a reference electrode sheet. Each positive electrode sheet includes a positive tab portion, and positive tab portions of the plurality of positive electrode sheets are electrically connected to form the positive tab. Each negative electrode sheet includes a negative tab portion, and negative tab portions of the plurality of negative electrode sheets are electrically connected to form the negative tab. Each reference electrode sheet includes a reference tab portion, and reference tab portions of the plurality of reference electrode sheets are electrically connected to form the reference tab.

According to a second aspect, this application provides a battery cell assembly, including a battery cell and a first tab glue. The battery cell includes a battery cell body and a tab. The tab extends relative to the battery cell body. The tab includes a fixed tab portion and a bent tab portion. The fixed tab portion is fastened to the battery cell body. The bent tab portion is fastened to an end that is of the fixed tab portion and that is away from the battery cell body. The first tab glue includes a first portion and a second portion. The first portion is provided on an inner side surface of the fixed tab portion. The second portion is fastened to a top side of the first portion and is provided on an inner side surface of the bent tab portion. A left side surface of the second portion is flush with a left side surface of the bent tab portion, and a right side surface of the second portion is flush with a right side surface of the bent tab portion.

In other words, the second portion does not have any projected portion relative to the left side surface and the right side surface of the bent tab portion. When the bent tab portion is bent relative to the fixed tab portion, the entire second portion is bent along with the bent tab portion. No excess portion of the second portion is raised relative to the bent tab portion and occupies space in the length direction of the battery. This can also effectively avoid space waste of the battery in the length direction and facilitate improvement of a battery capacity.

The tab has a flattened state and a bent state. When the tab is in a flattened state, the bent tab portion is in a flattened state and is relatively flattened with the fixed tab portion. When the tab is in a bent state, the bent tab portion is in a bent state and is bent relative to the fixed tab portion.

In an implementation, the tab further includes an active tab portion, and the active tab portion is fastened to an end that is of the bent tab portion and that is away from the fixed tab portion. In other words, the bent tab portion is fastened between the fixed tab portion and the active tab portion. When the tab is in a flattened state, the active tab portion and the fixed tab portion as well as the active tab portion and the bent tab portion are relatively flattened. When the tab is in a bent state, the active tab portion is spaced apart and arranged opposite to the fixed tab portion, and the bent tab portion is also bent relative to the active tab portion.

In an implementation, a left side surface of the first portion projects relative to a left side surface of the fixed tab portion, and/or a right side surface of the first portion projects relative to a right side surface of the fixed tab portion. The first tab glue is in an inverted "T" shape.

In an implementation, the battery cell assembly further includes a second tab glue. The second tab glue is provided on an outer side surface of the fixed tab portion, and an outer side surface of the bent tab portion is exposed relative to the second tab glue. In other words, the second tab glue is not provided on the outer side surface of the bent tab portion. In other words, a tab glue is not provided on the outer side surface of the bent tab portion.

When the battery cell assembly in this application is used in a battery, because the tab glue is also not provided on the outer side surface of the bent tab portion, space occupation of the tab glue provided on a surface of the bent tab portion in a length direction of the battery can further be reduced, thereby avoiding space waste of the battery in the length direction and facilitating improvement of a battery capacity. In addition, because the tab glue is also not provided on the outer side surface of the bent tab portion, the bent tab portion can further be easily bent relative to the fixed tab glue, thereby facilitating improvement of assembly convenience of a battery.

In an implementation, the battery cell assembly further includes a second tab glue. The second tab glue is provided on an outer side surface of the fixed tab portion and an outer side surface of the bent tab portion. When the battery cell assembly is used in a battery, the second tab glue can effectively protect an exposed portion of the tab, thereby preventing the tab from contacting another component to cause a short circuit, and ensuring usage reliability of the battery.

In an implementation, the second tab glue includes a first glue portion and a second glue portion. The first glue portion is provided on the outer side surface of the fixed tab portion. The second glue portion is fastened to the first glue portion and is provided on the outer side surface of the bent tab portion. A left side surface of the second glue portion is flush with a left side surface of the bent tab portion, and a right side surface of the second glue portion is flush with a right side surface of the bent tab portion. In other words, the second glue portion does not have any projected portion relative to the left side surface and the right side surface of the bent tab portion. When the bent tab portion is bent relative to the fixed tab portion, the entire second glue portion is bent along with the bent tab portion. No excess portion of the second glue portion is raised relative to the bent tab portion and occupies space in the length direction of the battery. This can also effectively avoid space waste of the battery in the length direction and facilitate improvement of a battery capacity.

In an implementation, the first glue portion includes a first sub-glue portion and a second sub-glue portion. The first sub-glue portion is provided on the outer side surface of the fixed tab portion. A left side surface of the first sub-glue portion projects relative to a left side surface of the fixed tab portion, and/or a right side surface of the first sub-glue portion projects relative to a right side surface of the fixed tab portion.

The second sub-glue portion is fastened between the first sub-glue portion and the second glue portion, and is provided on the outer side surface of the fixed tab portion. A left side surface of the second sub-glue portion is flush with the left side surface of the fixed tab portion, and/or a right side surface of the second sub-glue portion is flush with the right side surface of the fixed tab portion.

The first glue portion may be in an inverted "T" shape.

In an implementation, the second tab glue includes a first glue portion and a second glue portion. The first glue portion is provided on the outer side surface of the fixed tab portion. The second glue portion is fastened to the first glue portion and is provided on the outer side surface of the bent tab portion. A width of the second glue portion gradually increases along a direction from the second glue portion to the first glue portion.

An included angle between a left side surface of the second glue portion and a left side surface of the bent tab portion is an acute angle, an included angle between a right side surface of the second glue portion and a right side surface of the bent tab portion is an acute angle, or a right side surface of the second glue portion is flush with a right side surface of the bent tab portion.

Alternatively, a right side surface of the second glue portion is flush with a right side surface of the bent tab portion, and an included angle between the right side surface of the second glue portion and the right side surface of the bent tab portion is an acute angle.

When the bent tab portion of the tab is bent relative to the fixed tab portion, the second glue portion is bent along with the bent tab portion. Because the second glue portion projects less from the left side surface and right side surface of the bent tab portion, no excess portion of the second glue portion is raised relative to the bent tab portion and occupies space in the length direction of the battery. This can effectively avoid space waste of the battery in the length direction and facilitate improvement of a battery capacity.

In an implementation, a width of the first glue portion gradually increases along the direction from the second glue portion to the first glue portion. A left side surface of the first glue portion projects relative to the left side surface of the fixed tab portion, and is flush with the left side surface of the second glue portion. A right side surface of the first glue portion projects relative to the right side surface of the fixed tab portion, and is flush with the right side surface of the second glue portion. The second tab glue is trapezoidal.

In an implementation, a quantity of tabs is two. Both the two tabs extend relative to the battery cell body and are spaced apart from each other. One is a positive tab and the other is a negative tab.

A quantity of first tab glues is two. The two first tab glues are respectively provided on inner side surfaces of two fixed tab portions, and inner side surfaces of bent tab portions are each exposed relative to the first tab glue.

In an implementation, the battery cell includes an electrode unit and a packaging film. The packaging film covers an outer surface of the electrode unit to package the electrode unit. The electrode unit includes a plurality of positive electrode sheets, a plurality of negative electrode sheets, and a plurality of separators. The plurality of positive electrode sheets and the plurality of negative electrode sheets are alternately stacked. Each separator is located between a positive electrode sheet and a negative electrode sheet. Each positive electrode sheet includes a positive tab portion, and positive tab portions of the plurality of positive electrode sheets are electrically connected to form the positive tab. Each negative electrode sheet includes a negative tab portion, and negative tab portions of the plurality of negative electrode sheets are electrically connected to form the negative tab.

In an implementation, a quantity of tabs is three. All the three tabs extend relative to the battery cell body and are arranged at intervals. The tabs are a positive tab, a negative tab, and a reference tab, respectively.

A quantity of first tab glues is three. The three first tab glues are respectively provided on inner side surfaces of three fixed tab portions, and inner side surfaces of the bent tab portions are each exposed relative to the first tab glue.

In an implementation, the battery cell includes an electrode unit and a packaging film. The packaging film covers an outer surface of the electrode unit to package the electrode unit. The electrode unit includes a plurality of positive electrode sheets, a plurality of negative electrode sheets, a plurality of reference electrode sheets, and a plurality of separators. The plurality of positive electrode sheets, the plurality of negative electrode sheets, and the plurality of reference electrode sheets are alternately stacked. Some of the separators are located between a positive electrode sheet and a negative electrode sheet, some of the separators are located between a positive electrode sheet and a reference electrode sheet, and some of the separators are located between a negative electrode sheet and a reference electrode sheet. Each positive electrode sheet includes a positive tab portion, and positive tab portions of the plurality of positive electrode sheets are electrically connected to form the positive tab. Each negative electrode sheet includes a negative tab portion, and negative tab portions of the plurality of negative electrode sheets are electrically connected to form the negative tab. Each reference electrode sheet includes a reference tab portion, and reference tab portions of the plurality of reference electrode sheets are electrically connected to form the reference tab.

According to a third aspect, this application provides a battery cell assembly, including a battery cell and a first tab glue. The battery cell includes a battery cell body and a tab. The tab extends relative to the battery cell body. The tab includes a fixed tab portion and a bent tab portion. The fixed tab portion is fastened to the battery cell body. The bent tab portion is fastened to an end that is of the fixed tab portion and that is away from the battery cell body. The first tab glue includes a first portion and a second portion. The first portion is provided on an inner side surface of the fixed tab portion. The second portion is fastened to a top side of the first glue portion and is provided on an inner side surface of the bent tab portion. A width of the second portion gradually increases along a direction from the second portion to the first portion.

An included angle between a left side surface of the second portion and a left side surface of the bent tab portion is an acute angle, an included angle between a right side surface of the second portion and a right side surface of the bent tab portion is an acute angle, or a right side surface of the second portion is flush with a right side surface of the bent tab portion.

Alternatively, a right side surface of the second portion is flush with a right side surface of the bent tab portion, and an included angle between the right side surface of the second portion and the right side surface of the bent tab portion is an acute angle.

When the bent tab portion of the tab is bent relative to the fixed tab portion, the second portion is bent along with the bent tab portion. Because the second portion projects less from the left side surface and right side surface of the bent tab portion, no excess portion of the second portion is raised relative to the bent tab portion and occupies space in the length direction of the battery. This can effectively avoid space waste of the battery in the length direction and facilitate improvement of a battery capacity.

In an implementation, a width of the first portion gradually increases along the direction from the second portion to the first portion. A left side surface of the first portion projects relative to a left side surface of the fixed tab portion, and is flush with the left side surface of the second portion. A right side surface of the first portion projects relative to a right side surface of the fixed tab portion, and is flush with the right side surface of the second portion. The first tab glue is trapezoidal.

The tab has a flattened state and a bent state. When the tab is in a flattened state, the bent tab portion is in a flattened state and is relatively flattened with the fixed tab portion. When the tab is in a bent state, the bent tab portion is in a bent state and is bent relative to the fixed tab portion.

In an implementation, the tab further includes an active tab portion, and the active tab portion is fastened to an end that is of the bent tab portion and that is away from the fixed tab portion. In other words, the bent tab portion is fastened between the fixed tab portion and the active tab portion. When the tab is in a flattened state, the active tab portion and the fixed tab portion as well as the active tab portion and the bent tab portion are relatively flattened. When the tab is in a bent state, the active tab portion is spaced apart and arranged opposite to the fixed tab portion, and the bent tab portion is also bent relative to the active tab portion.

In an implementation, a left side surface of the first portion projects relative to a left side surface of the fixed tab portion, and/or a right side surface of the first portion projects relative to a right side surface of the fixed tab portion. The first tab glue is in an inverted "T" shape.

In an implementation, the battery cell assembly further includes a second tab glue. The second tab glue is provided on an outer side surface of the fixed tab portion, and an outer side surface of the bent tab portion is exposed relative to the second tab glue. In other words, the second tab glue is not provided on the outer side surface of the bent tab portion. In other words, a tab glue is not provided on the outer side surface of the bent tab portion.

When the battery cell assembly in this application is used in a battery, because the tab glue is also not provided on the outer side surface of the bent tab portion, space occupation of the tab glue provided on a surface of the bent tab portion in a length direction of the battery can further be reduced, thereby avoiding space waste of the battery in the length direction and facilitating improvement of a battery capacity. In addition, because the tab glue is also not provided on the outer side surface of the bent tab portion, the bent tab portion can further be easily bent relative to the fixed tab glue, thereby facilitating improvement of assembly convenience of a battery.

In an implementation, the battery cell assembly further includes a second tab glue. The second tab glue is provided on an outer side surface of the fixed tab portion and an outer side surface of the bent tab portion. When the battery cell assembly is used in a battery, the second tab glue can effectively protect an exposed portion of the tab, thereby preventing the tab from contacting another component to cause a short circuit, and ensuring usage reliability of the battery.

In an implementation, the second tab glue includes a first glue portion and a second glue portion. The first glue portion is provided on the outer side surface of the fixed tab portion. The second glue portion is fastened to the first glue portion and is provided on the outer side surface of the bent tab portion. A left side surface of the second glue portion is flush with a left side surface of the bent tab portion, and a right side surface of the second glue portion is flush with a right side surface of the bent tab portion. In other words, the second glue portion does not have any projected portion relative to the left side surface and the right side surface of the bent tab portion. When the bent tab portion is bent relative to the fixed tab portion, the entire second glue portion is bent along with the bent tab portion. No excess portion of the second glue portion is raised relative to the bent tab portion and occupies space in the length direction of the battery. This can also effectively avoid space waste of the battery in the length direction and facilitate improvement of a battery capacity.

In an implementation, the first glue portion includes a first sub-glue portion and a second sub-glue portion. The first sub-glue portion is provided on the outer side surface of the fixed tab portion. A left side surface of the first sub-glue portion projects relative to a left side surface of the fixed tab portion, and/or a right side surface of the first sub-glue portion projects relative to a right side surface of the fixed tab portion.

The second sub-glue portion is fastened between the first sub-glue portion and the second glue portion, and is provided on the outer side surface of the fixed tab portion. A left side surface of the second sub-glue portion is flush with the left side surface of the fixed tab portion, and/or a right side surface of the second sub-glue portion is flush with the right side surface of the fixed tab portion.

The first glue portion may be in an inverted "T" shape.

In an implementation, the second tab glue includes a first glue portion and a second glue portion. The first glue portion is provided on the outer side surface of the fixed tab portion. The second glue portion is fastened to the first glue portion and is provided on the outer side surface of the bent tab portion. A width of the second glue portion gradually increases along a direction from the second glue portion to the first glue portion.

An included angle between a left side surface of the second glue portion and a left side surface of the bent tab portion is an acute angle, an included angle between a right side surface of the second glue portion and a right side surface of the bent tab portion is an acute angle, or a right side surface of the second glue portion is flush with a right side surface of the bent tab portion.

Alternatively, a right side surface of the second glue portion is flush with a right side surface of the bent tab portion, and an included angle between the right side surface of the second glue portion and the right side surface of the bent tab portion is an acute angle.

When the bent tab portion of the tab is bent relative to the fixed tab portion, the second glue portion is bent along with the bent tab portion. Because the second glue portion projects less from the left side surface and right side surface of the bent tab portion, no excess portion of the second glue portion is raised relative to the bent tab portion and occupies space in the length direction of the battery. This can effectively avoid space waste of the battery in the length direction and facilitate improvement of a battery capacity.

In an implementation, a width of the first glue portion gradually increases along the direction from the second glue portion to the first glue portion. A left side surface of the first glue portion projects relative to the left side surface of the fixed tab portion, and is flush with the left side surface of the second glue portion. A right side surface of the first glue portion projects relative to the right side surface of the fixed tab portion, and is flush with the right side surface of the second glue portion. The second tab glue is trapezoidal.

In an implementation, a quantity of tabs is two. Both the two tabs extend relative to the battery cell body and are spaced apart from each other. One is a positive tab and the other is a negative tab.

A quantity of first tab glues is two. The two first tab glues are respectively provided on inner side surfaces of two fixed tab portions, and inner side surfaces of bent tab portions are each exposed relative to the first tab glue.

In an implementation, the battery cell includes an electrode unit and a packaging film. The packaging film covers an outer surface of the electrode unit to package the electrode unit. The electrode unit includes a plurality of positive electrode sheets, a plurality of negative electrode sheets, and a plurality of separators. The plurality of positive electrode sheets and the plurality of negative electrode sheets are alternately stacked. Each separator is located between a positive electrode sheet and a negative electrode sheet. Each positive electrode sheet includes a positive tab portion, and positive tab portions of the plurality of positive electrode sheets are electrically connected to form the positive tab. Each negative electrode sheet includes a negative tab portion, and negative tab portions of the plurality of negative electrode sheets are electrically connected to form the negative tab.

In an implementation, a quantity of tabs is three. All the three tabs extend relative to the battery cell body and are arranged at intervals. The tabs are a positive tab, a negative tab, and a reference tab, respectively.

A quantity of first tab glues is three. The three first tab glues are respectively provided on inner side surfaces of three fixed tab portions, and inner side surfaces of the bent tab portions are each exposed relative to the first tab glue.

In an implementation, the battery cell includes an electrode unit and a packaging film. The packaging film covers an outer surface of the electrode unit to package the electrode unit. The electrode unit includes a plurality of positive electrode sheets, a plurality of negative electrode sheets, a plurality of reference electrode sheets, and a plurality of separators. The plurality of positive electrode sheets, the plurality of negative electrode sheets, and the plurality of reference electrode sheets are alternately stacked. Some of the separators are located between a positive electrode sheet and a negative electrode sheet, some of the separators are located between a positive electrode sheet and a reference electrode sheet, and some of the separators are located between a negative electrode sheet and a reference electrode sheet. Each positive electrode sheet includes a positive tab portion, and positive tab portions of the plurality of positive electrode sheets are electrically connected to form the positive tab. Each negative electrode sheet includes a negative tab portion, and negative tab portions of the plurality of negative electrode sheets are electrically connected to form the negative tab. Each reference electrode sheet includes a reference tab portion, and reference tab portions of the plurality of reference electrode sheets are electrically connected to form the reference tab.

According to a fourth aspect, this application provides a battery, including any one of the battery cell assemblies and a protection circuit board. The tab further includes an active tab portion. The active tab portion is fastened to an end that is of the bent tab portion and that is away from the fixed tab portion. The bent tab portion is in a bent state. The fixed tab portion is spaced apart and arranged opposite to the active tab portion. The protection circuit board is located on a side that is of the active tab portion and that is away from the fixed tab portion and is electrically connected to the active tab portion.

The battery in this application uses the battery cell assembly. The battery cell assembly can reduce space occupation of the tab glue provided on a surface of the bent tab portion in a length direction of the battery, thereby avoiding space waste of the battery in the length direction and facilitating improvement of a battery capacity.

In an implementation, the protection circuit board includes a first side surface and a second side surface. The first side surface is arranged opposite to the second side surface. A second glue portion in a second tab glue is located between the first side surface and the second side surface. In other words, the second glue portion does not project relative to a side surface of the protection circuit board, to ensure that a length of the battery cell assembly satisfies a packaging specification of the protection circuit board after the battery is packaged.

In an implementation, a length of a protection board is less than or equal to 3.5 mm.

According to a fifth aspect, this application provides an electronic device, including a housing and any one of the batteries. The battery is mounted on an inner side of the housing.

The battery is used in the electronic device in this application. The battery cell assembly in the battery can reduce space occupation of the tab glue provided on a surface of the bent tab portion in a length direction of the battery, thereby avoiding space waste of the battery in the length direction, facilitating improvement of a battery capacity, and further facilitating improvement of battery life of the electronic device.

### BRIEF DESCRIPTION OF DRAWINGS

To describe the technical solutions in embodiments of this application more clearly, the following describes accompanying drawings required for embodiments of this application.
FIG. 1 is a schematic diagram of a structure of a first electronic device according to an embodiment of this application;
FIG. 2 is a schematic diagram of a structure of a battery in the electronic device shown in FIG. 1;
FIG. 3 is a schematic diagram of a cross-sectional structure of the battery shown in FIG. 2 after being sectioned along I-I;
FIG. 4 is a schematic diagram of a plane structure of a battery cell of a battery cell assembly in the battery shown in FIG. 3;
FIG. 5 is a schematic diagram of a plane structure of the battery cell shown in FIG. 4 from another perspective;
FIG. 6 is a schematic diagram of a plane structure of a battery cell assembly in the battery shown in FIG. 3 in a first implementation;
FIG. 7 is a schematic diagram of a plane structure of the battery cell assembly shown in FIG. 6 from another perspective;
FIG. 8 is a schematic diagram of a plane structure of a battery cell assembly in the battery shown in FIG. 3 in a second implementation;
FIG. 9 is a schematic diagram of a plane structure of the battery cell assembly shown in FIG. 8 from another perspective;
FIG. 10 is a schematic diagram of a cross-sectional structure of a battery in a second electronic device after being sectioned along I-I according to an embodiment of this application;
FIG. 11 is a schematic diagram of a plane structure of a battery cell assembly in the battery shown in FIG. 10 in a first implementation; and
FIG. 12 is a schematic diagram of a plane structure of a battery cell assembly in the battery shown in FIG. 10 in a second implementation.

### DESCRIPTION OF EMBODIMENTS

The following clearly and completely describes technical solutions in embodiments of this application with reference to the accompanying drawings in embodiments of this application.

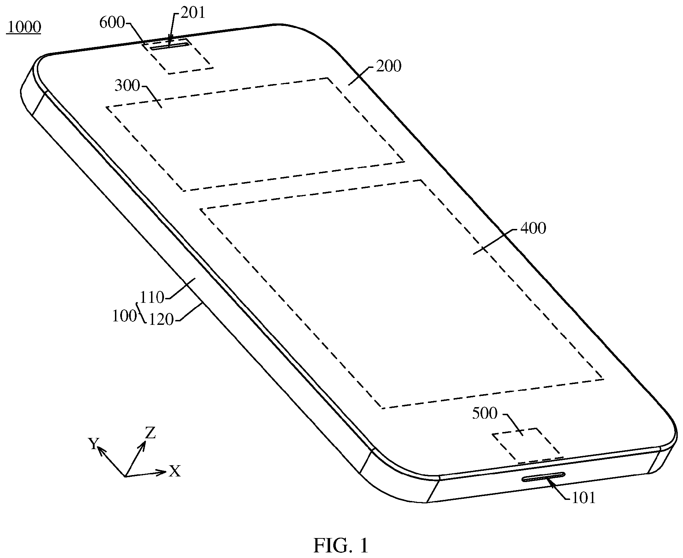

FIG. 1 is a schematic diagram of a structure of an electronic device 1000 according to an embodiment of this application.

The electronic device 1000 may be an electronic product, such as a mobile phone, a tablet computer, a notebook computer, in-vehicle infotainment, a smartwatch, a smart bracelet, or a POS terminal (point of sales terminal, point of sales terminal). The following uses an example in which the electronic device 1000 is a mobile phone for description in this embodiment of this application. For ease of description, a width direction of the electronic device 1000 is defined as an X-axis direction, a length direction of the electronic device 1000 is defined as a Y-axis direction, a thickness direction of the electronic device 1000 is defined as a Z-axis direction, and the X-axis direction, the Y-axis direction, and the Z-axis direction are perpendicular to each other.

The electronic device 1000 includes a housing 100, a display screen 200, a circuit board 300, a battery 400, a speaker 500, and an earpiece 600. The display screen 200 is mounted on a side of the housing 100, and the circuit board 300, the battery 400, the speaker 500, and the earpiece 600 are all mounted on an inner side of the housing 100.

The housing 100 may include a middle frame 110 and a rear cover 120. The rear cover 120 is mounted on a side of the middle frame 110. A speaker hole 101 is provided on the middle frame 110, and the speaker hole 101 is communicated with the inner side and an outer side of the housing 100. For example, there is one speaker hole 101. In some other embodiments, there may alternatively be two or more speaker holes 101. A quantity of speaker holes 101 is not specifically limited in this application. The rear cover 120 may be a battery cover of the electronic device 1000. For example, the rear cover 120 may be detachably mounted on the middle frame 110 to facilitate repair and replacement of an internal component or module of the electronic device 1000.

The display screen 200 is mounted on another side of the middle frame 110. In other words, the display screen 200 is mounted on a side that is of the middle frame 110 and that is away from the rear cover 120. In other words, the display screen 200 and the rear cover 120 are respectively mounted on two opposite sides of the middle frame 110. When a user uses the electronic device 1000, the display screen 200 is placed toward the user, and the rear cover 120 is placed away from the user. The display screen 200 includes a cover plate and a display screen (not shown in the figure) fastened to the cover plate. The cover plate may be made of a transparent material such as glass. The display screen may be a liquid crystal display (LCD, liquid crystal display) or an organic light-emitting diode (OLED, organic light-emitting diode) display screen, or the like for displaying information such as an image or text.

In this embodiment, an earpiece hole 201 is provided on the display screen 200. The earpiece hole 201 passes through the display screen 200 along a thickness direction (that is, the Z-axis direction shown in the figure) of the display screen 200 and is communicated with the inner side and the outer side of the housing 100. In some other embodiments, the earpiece hole 201 may alternatively not be provided on the display screen 200. The display screen 200 may be jointly enclosed with the housing 100 to form the earpiece hole 201, or the earpiece hole 201 is provided on the housing 100. A forming manner of the earpiece hole 201 is not specifically limited in this application.

The circuit board 300 may be a mainboard (mainboard) of the electronic device 1000. The battery 400, the speaker 500, and the earpiece 600 are all electrically connected to the circuit board 300. The battery 400 may be an energy storage component of the electronic device 1000 and is configured to provide power to a component, such as the display screen 200, the speaker 500, and the earpiece 600. The speaker 500 is located at a bottom of the housing 100. The speaker 500 may receive an audio signal by using the circuit board 300, and vibrate, based on the received audio signal, to produce sound. The sound is diffused into an external environment through the speaker hole 101, to implement sound production of the electronic device 1000. The earpiece 600 is located at a top of the housing 100. The earpiece 600 may receive an audio signal by using the circuit board 300, and vibrate, based on the received audio signal, to produce sound. The sound is diffused into the external environment through the earpiece hole 201, to implement sound production of the electronic device 1000.

It should be noted that, in this embodiment of this application, orientation words such as "top", "bottom", "left", "right", "upper", and "lower" that are used when the electronic device 1000 is described are mainly described based on a display orientation of the electronic device 1000 in FIG. 1. A positive direction toward the Y-axis is "top", a negative direction toward the Y-axis is "bottom", a positive direction toward the X-axis is "right", a negative direction toward the X-axis is "left", a positive direction toward the Z-axis is "upper", and a negative direction toward the Z-axis is "lower". This does not constitute a limitation on an orientation of the electronic device 1000 in an actual application scenario.

In a conventional pouch cell battery, a tab of a battery cell is often bent to facilitate being electrically connected to a protection circuit board. To ensure that the tab does not contact with another part to cause a short circuit, a surface of the tab is often coated with a tab glue. However, after being bent along with the tab, the tab glue occupies specific space in a length direction of the battery, causing space waste in the length direction of the battery. This is not conducive to improvement of a battery capacity.

The following describes a structure of the battery 400 in the electronic device 1000 in this embodiment of this application in detail.

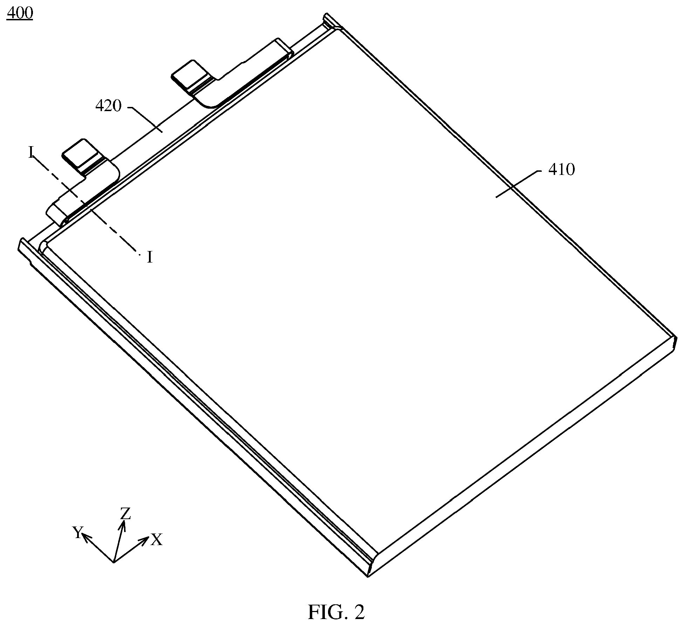

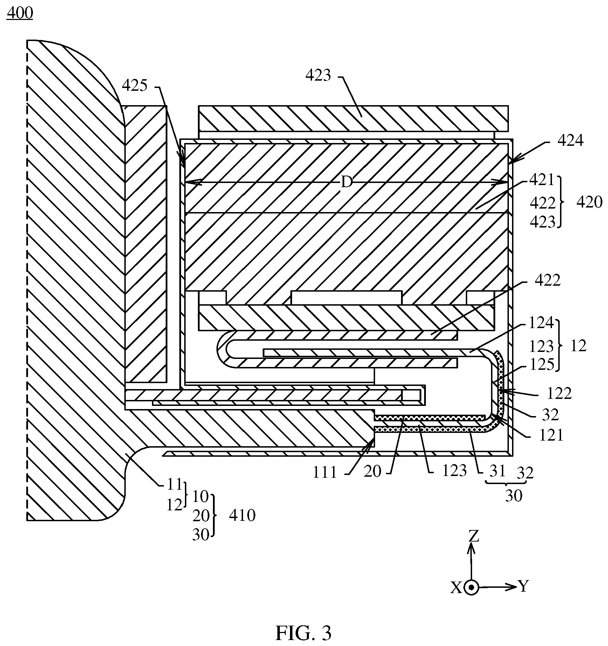

Refer to FIG. 2 and FIG. 3. FIG. 2 is a schematic diagram of a structure of the battery 400 in the electronic device 1000 shown in FIG. 1. FIG. 3 is a schematic diagram of a cross-sectional structure of the battery 400 shown in FIG. 2 after being sectioned along I-I. "Being sectioned along I-I" means being sectioned along a plane on which an I-I line is located, and the following related description may be understood in the same way.

It should be understood that, in this embodiment of this application, a length direction of the battery 400 is a Y-axis direction, a width direction of the battery 400 is an X-axis direction, and a thickness direction of the battery 400 is a Z-axis direction.

The battery 400 includes a battery cell assembly 410 and a protection board assembly 420. The protection board assembly 420 is mounted on a top side of the battery cell assembly 410 and is electrically connected to the battery cell assembly 410. The protection board assembly 420 includes a protection circuit board 421, an electrical connector 422, and an external circuit board 423. The electrical connector 422 is located on a lower side of the protection circuit board 421 and is electrically connected between the protection circuit board 421 and the battery cell assembly 410, to implement electrical connection between the protection board assembly 420 and the battery cell assembly 410. For example, the electrical connector 422 may be in a "U" shape. The external circuit board 423 is located on an upper side of the protection circuit board 421 and is electrically connected to the protection circuit board 421 and the circuit board 300 (as shown in FIG. 1), to implement electrical connection between the protection board assembly 420 and the circuit board 300, and further implement electrical connection between the battery 400 and the circuit board 300.

The protection circuit board 421 includes a first side surface 424 and a second side surface 425. The first side surface 424 is a surface that is of the protection circuit board 421 and that faces a positive direction of the Y axis, and the second side surface 425 is a surface that is of the protection circuit board 421 and that faces a negative direction of the Y axis. The first side surface 424 is arranged opposite to the second side surface 425 along the Y-axis direction. A length of the protection circuit board 421 is D. In other words, a distance between the first side surface 424 and the second side surface 425 along the Y-axis direction is D. For example, D is less than or equal to 3.5 mm. In some other embodiments, D may alternatively be greater than 3.5 mm.

It should be noted that, in this embodiment of this application, the mentioned "length" means a dimension of a component along the Y-axis direction, and the mentioned "width" means a dimension of the component along the X-axis direction when a dimension of the component is described. The following related description may be understood in the same way.

The battery cell assembly 410 includes a battery cell 10, a first tab glue 20, and a second tab glue 30. The battery cell 10 includes a battery cell body 11 and a tab 12. The tab 12 extends relative to the battery cell body 11. The battery cell body 11 has a reference surface 111, and the reference surface 111 is a surface that is of the battery cell body 11 and that faces the positive direction of the Y axis. The tab 12 extends relative to the reference surface 111. The tab 12 includes a first surface 121 and a second surface 122. The first surface 121 is arranged opposite to the second surface 122 along a thickness direction of the tab 12. For example, the first surface 121 is a surface that is of the tab 12 and that faces the battery cell body 11, and the second surface 122 is a surface that is of the tab 12 and that is away from the battery cell body 11. The first tab glue 20 is provided on the first surface 121, and the second tab glue 30 is provided on the second surface 122.

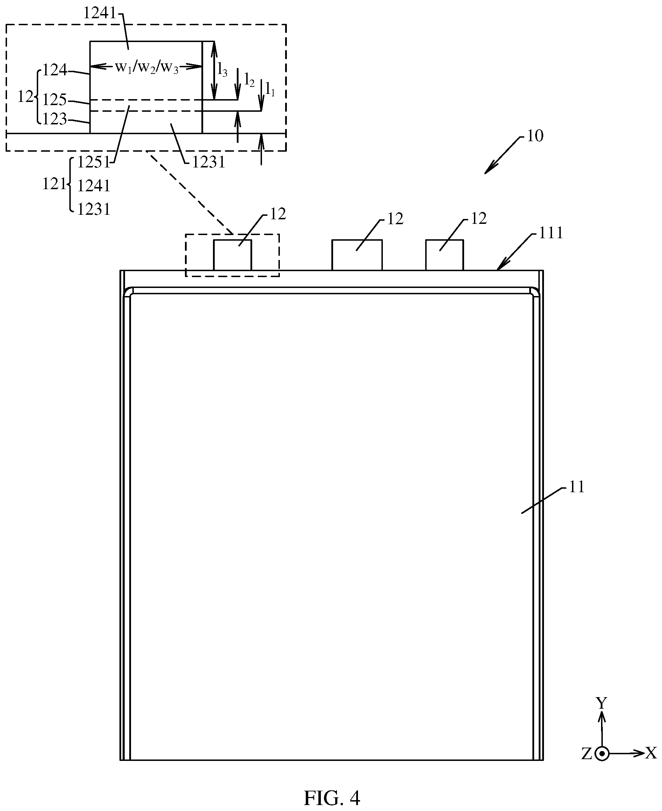

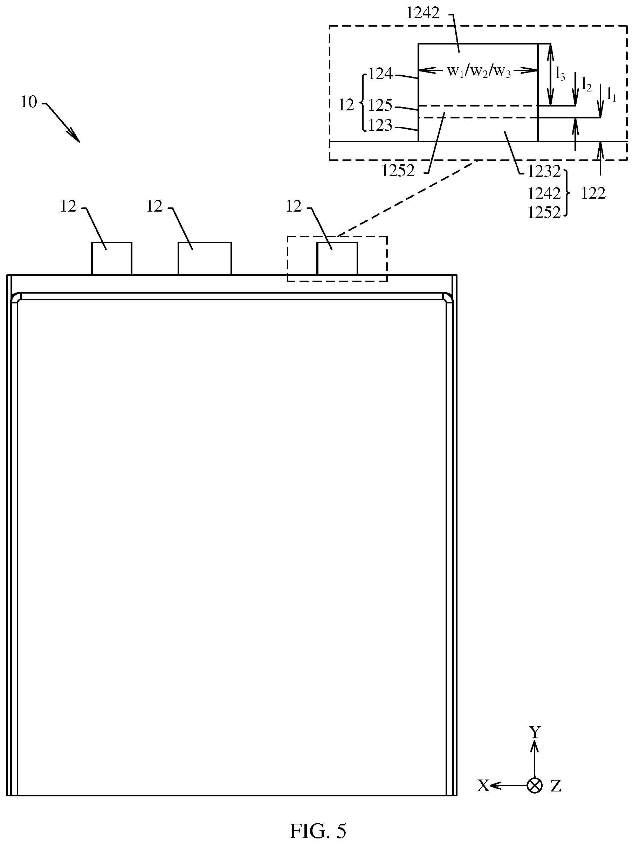

Refer to FIG. 4 and FIG. 5. FIG. 4 is a schematic diagram of a structure of the battery cell 10 of the battery cell assembly 410 in the battery 400 shown in FIG. 3. FIG. 5 is a schematic diagram of a structure of the battery cell 10 shown in FIG. 4 from another perspective. The battery cell 10 shown in FIG. 4 and FIG. 5 is not been assembled with the protection board assembly 420, and the tab 12 of the battery cell 10 is in an unbent state. In other words, the tab 12 of the battery cell 10 is in a flattened state.

In this embodiment, a quantity of tabs 12 are three. The three tabs 12 all project relative to the reference surface 111 and are arranged at intervals from each other along the X-axis direction. One tab 12 is used as a positive tab of the battery cell 10, one tab 12 is used as a negative tab of the battery cell 10, and one tab 12 is used as a reference tab of the battery cell 10. It should be noted that the reference tab is a tab in the battery cell 10 of which potential is always 0 V.

For example, the battery cell assembly 410 may include an electrode unit (not shown in the figure) and a packaging film (not shown in the figure). The packaging film covers an outer surface of the electrode unit to package the electrode unit. The electrode unit includes a plurality of positive electrode sheets, a plurality of negative electrode sheets, a plurality of reference electrode sheets, and a plurality of separators. The plurality of positive electrode sheets, the plurality of negative electrode sheets, and the plurality of reference electrode sheets are alternately stacked. Some of the separators are located between a positive electrode sheet and a negative electrode sheet, some of the separators are located between a positive electrode sheet and a reference electrode sheet, and some of the separators are located between a negative electrode sheet and a reference electrode sheet. Each positive electrode sheet includes a positive tab portion, and positive tab portions of the plurality of positive electrode sheets are electrically connected to form the positive tab. Each negative electrode sheet includes a negative tab portion, and negative tab portions of the plurality of negative electrode sheets are electrically connected to form the negative tab. Each reference electrode sheet includes a reference tab portion, and reference tab portions of the plurality of reference electrode sheets are electrically connected to form the reference tab.

It should be noted that, in some other implementations, a quantity of the tabs 12 may alternatively be two. One is used as a positive tab of the battery cell 10, and the other is used as a negative tab of the battery cell 10. In this case, the electrode unit includes a plurality of positive electrode sheets, a plurality of negative electrode sheets, and a plurality of separators. The plurality of positive electrode sheets and the plurality of negative electrode sheets are alternately stacked. Each separator is located between a positive electrode sheet and a negative electrode sheet. Positive tab portions of the plurality of positive electrode sheets are electrically connected to form the positive tab, and negative tab portions of the plurality of negative electrode sheets are electrically connected to form the negative tab.

Each tab 12 includes a fixed tab portion 123, an active tab portion 124, and a bent tab portion 125. The bent tab portion 125 is fastened between the fixed tab portion 123 and the active tab portion 124. Each tab 12 has a flattened state and a bent state. When the tab 12 is in a flattened state (as shown in FIG. 4 and FIG. 5), the bent tab portion 125 is in a flattened state, and the fixed tab portion 123 and the active tab portion 124, the fixed tab portion 123 and the bent tab portion 125, and the active tab portion 124 and the bent tab portion 125 are all relatively flattened. When the tab 12 is in a bent state (as shown in FIG. 3), the bent tab portion 125 is in a bent state, the fixed tab portion 123 is spaced apart and arranged opposite to the active tab portion 124, and the bent tab portion 125 is bent relative to the fixed tab portion 123 and active tab portion 124.

The fixed tab portion 123 is located on a side that is of the tab 12 and that is close to the battery cell body 11 and is fastened to the battery cell body 11. The fixed tab portion 123 includes an inner side surface 1231 and an outer side surface 1232. The inner side surface 1231 is arranged opposite to the outer side surface 1232 of the fixed tab portion 123 along a thickness direction (a Z-axis direction in the figure) of the fixed tab portion 123. A length of the fixed tab portion 123 is l₁, and a width of the fixed tab portion 123 is w₁. For example, l₁ may be 1.2 mm.

The active tab portion 124 is located on a side that is of the tab 12 and that is away from the battery cell body 11. The active tab portion 124 includes an inner side surface 1241 and an outer side surface 1242. The inner side surface 1241 is arranged opposite to the outer side surface 1242 of the active tab portion 124 along a thickness direction (the Z-axis direction in the figure) of the active tab portion 124. A length of the active tab portion 124 is l₂, and a width of the active tab portion 124 is w₂. l₂ is greater than l₁, and w₂ is equal to w₁. In some other embodiments, l₂ may alternatively be less than or equal to l₁, and/or w₂ may alternatively be less than or equal to w₀.

It should be understood that "and/or" mentioned in this embodiment of this application means both "and" and "or". For example, A and/or B includes three cases: Only A exists, only B exists, and A and B exist at the same time. The following description of "and/or" may be understood in the same way.

The bent tab portion 125 is fastened between an end that is of the fixed tab portion 123 and that is away from the battery cell body 11 and an end that is of active tab portion 124 and that is close to the battery cell body 11. A length of the bent tab portion 125 is l₃, and a width of the bent tab portion 125 is w₃. l₃ is less than l₁, and w₃ is equal to w₁. For example, l₁ may be 0.6 mm. In some other embodiments, l₃ may alternatively be greater than or equal to l₁, and/or w₃ may alternatively be less than or equal to w₀.

The bent tab portion 125 includes an inner side surface 1251 and an outer side surface 1252. The inner side surface 1251 is arranged opposite to the outer side surface 1252 of the bent tab portion 125 along a thickness direction (the Z-axis direction in the figure) of the bent tab portion 125. Specifically, the inner side surface 1251 of the bent tab portion 125 is fastened between the inner side surface 1231 of the fixed tab portion 123 and the inner side surface 1241 of the active tab portion 124. The outer side surface 1252 of the bent tab portion 125 is fastened between the outer side surface 1232 of the fixed tab portion 123 and the outer side surface 1242 of the active tab portion 124. In this case, the first surface 121 includes the inner side surface 1231 of the fixed tab portion 123, the inner side surface 1241 of the active tab portion 124, and the inner side surface 1251 of the bent tab portion 125. The second surface 122 includes the outer side surface 1232 of the fixed tab portion 123, the outer side surface 1242 of the active tab portion 124, and the outer side surface 1252 of the bent tab portion 125.

Further refer to FIG. 3. When the tab 12 is in a bent state, the tab 12 is bent from the second surface 122 to the first surface 121. The bent tab portion 125 is bent relative to the fixed tab portion 123 and the active tab portion 124. The active tab portion 124 is located on an upper side of the fixed tab portion 123 and is arranged opposite to the fixed tab portion 123. The active tab portion 124 may extend into an opening of the electrical connector 422 and be electrically connected to the electrical connector 422 to implement electrical connection between the tab 12 and the electrical connector 422, thereby implementing electrical connection between the battery cell 10 and the electrical connector 422, and further implementing electrical connection between the battery cell assembly 410 and the electrical connector 422.

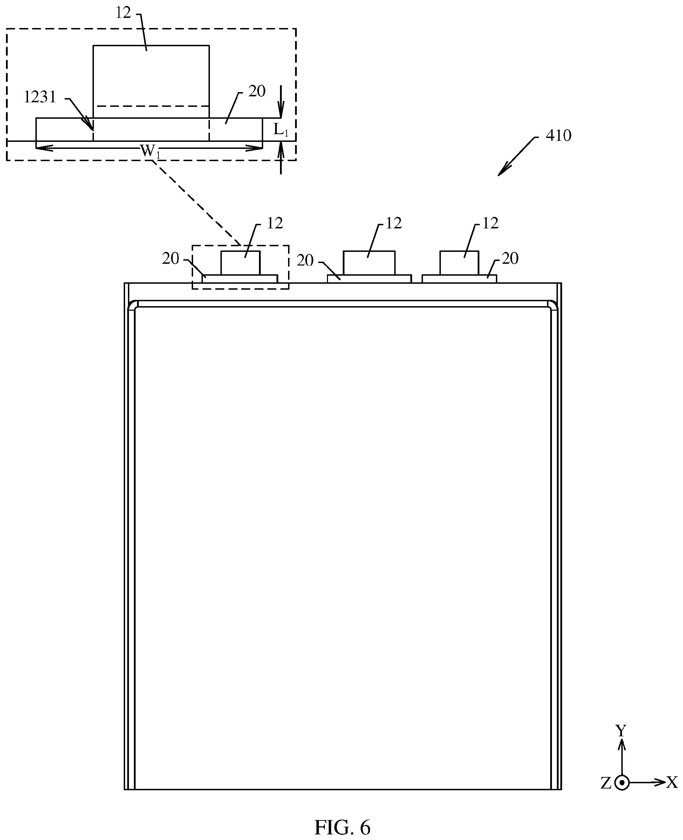

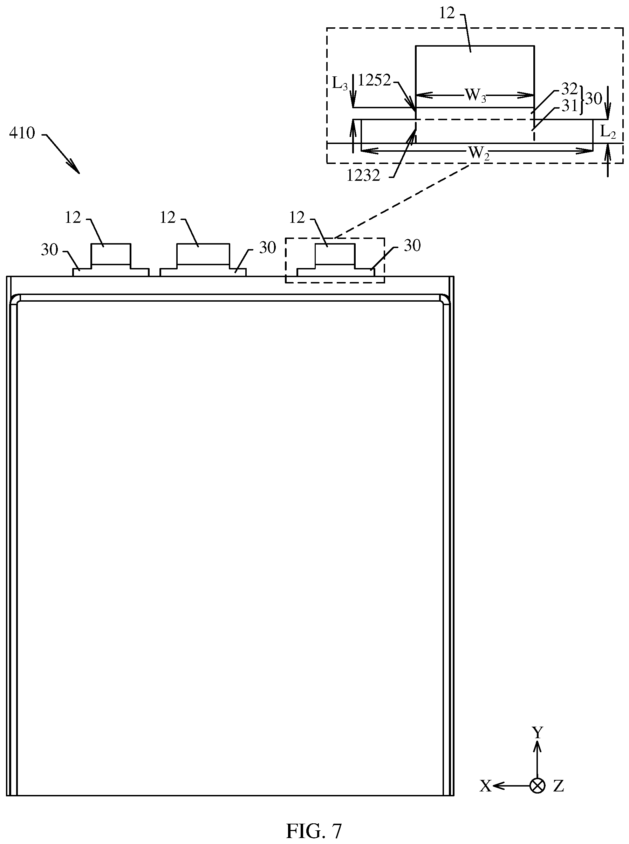

Refer to FIG. 6 and FIG. 7. FIG. 6 is a schematic diagram of a structure of the battery cell assembly 410 in the battery 400 shown in FIG. 3 in a first implementation. FIG. 7 is a schematic diagram of a structure of the battery cell assembly 410 shown in FIG. 6 from another perspective. The battery cell assembly 410 shown in FIG. 6 and FIG. 7 is not assembled with the protection board assembly 420. In this case, in the battery cell assembly 410, the tab 12 of the battery cell 10, the first tab glue 20, and the second tab glue 30 are in an unbent state.

In this implementation, both a quantity of first tab glues 20 and a quantity of second tab glues 30 are three. The three first tab glues 20 are respectively provided on first surfaces 121 of three tabs 12. The three second tab glues 30 are respectively provided on second surfaces 122 of the three tabs 12. It may be understood that the quantity of the first tab glues 20 and the quantity of the second tab glues 30 should match a quantity of tabs 12. When the quantity of tabs 12 are two, both the quantity of the first tab glues 20 and the quantity of the second tab glues 30 are two. The two first tab glues 20 are respectively provided on the first surfaces 121 of the two tabs 12, and the two second tab glues 30 are respectively provided on the second surfaces 122 of the two tabs 12.

It should be noted that, in this implementation, structures of the first tab glues 20 are the same. A matching relationship between each of the first tab glues 20 and a tab 12 is the same. Structures of the second tab glues 30 are the same. A matching relationship between each of the second tab glues 30 and a tab 12 are the same. A matching relationship between each of the second tab glues 30 and a first tab glue 20 are the same. The following uses a tab 12, a first tab glue 20, and a second tab glue 30 as an example to describe the structure of the battery cell assembly 410 in detail.

Further refer to FIG. 4. The first tab glue 20 is provided on the inner side surface 1231 of the fixed tab portion 123, and covers the inner side surface 1231 of the fixed tab portion 123. In this case, the inner side surface 1251 of the bent tab portion 125 is exposed relative to the first tab glue 20. In other words, the first tab glue 20 is not provided on the inner side surface 1251 of the bent tab portion 125. In other words, a tab glue is not provided on the inner side surface 1251 of the bent tab portion 125.

In this implementation, the first tab glue 20 is in a "straight-line" shape. A length of the first tab glue 20 is L₁, and L₁ is equal to l₁. For example, L₁ may be 1.2 mm. In some other implementations, L₁ may alternatively be less than l₁. In other words, the length L₁ of the first tab glue 20 may be less than or equal to the length l₁ of the fixed tab portion 123.

In addition, a width of the first tab glue 20 is W₁, and W₁ is greater than w₁. A left side surface (not marked in the figure) of the first tab glue 20 projects relative to a left side surface (not marked in the figure) of the fixed tab portion 123, and a right side surface (not marked in the figure) of the first tab glue 20 projects relative to a right side surface (not marked in the figure) of the fixed tab portion 123. In some other implementations, the left side surface of the first tab glue 20 may alternatively not project relative to the left side surface of the fixed tab portion 123, or the right side surface of the first tab glue 20 may not project relative to the right side surface of the fixed tab portion 123, or W₁ may be less than or equal to w₁.

Refer to FIG. 5 and FIG. 7. The second tab glue 30 is provided on the outer side surface 1232 of the fixed tab portion 123 and the outer side surface 1242 of the bent tab portion 125, and covers the outer side surface 1232 of the fixed tab portion 123 and the outer side surface 1242 of the bent tab portion 125. In this implementation, the second tab glue 30 is in an inverted "T" shape. The second tab glue 30 includes a first glue portion 31 and a second glue portion 32. The second glue portion 32 is located on a top side of the first glue portion 31 and is fastened to the first glue portion 31.

The first glue portion 31 is provided on the outer side surface 1232 of the fixed tab portion 123, and covers the outer side surface 1232 of the fixed tab portion 123. In this implementation, the first glue portion 31 is in a "straight-line" shape. A length of the first glue portion 31 is L₂, and L₂ is equal to l₁. In other words, L₂ is equal to L₁. For example, L₂ may be 1.2 mm. In some other implementations, L₂ may alternatively be less than l₁. In other words, the length L₂ of the first glue portion 31 is less than or equal to the length l₁ of the fixed tab portion 123.

In addition, a width of the first glue portion 31 is W₂, and W₂ is greater than w₁ and equal to W₁. A left side surface (not marked in the figure) of the first glue portion 31 projects relative to the left side surface (not marked in the figure) of the fixed tab portion 123, and a right side surface (not marked in the figure) of the first glue portion 31 projects relative to the right side surface (not marked in the figure) of the fixed tab portion 123. In this case, the left side surface of the first glue portion 31 may be flush with the left side surface of the first tab glue 20, and the right side surface of the first glue portion 31 may be flush with the right side surface of the first tab glue 20. In some other implementations, the left side surface of the first glue portion 31 may alternatively not project relative to the left side surface of the fixed tab portion 123, or the right side surface of the first glue portion 31 may not project relative to the right side surface of the fixed tab portion 123, or W₂ may be less than or equal to w₁.

The second glue portion 32 is provided on the outer side surface 1252 of the bent tab portion 125, and covers the outer side surface 1252 of the bent tab portion 125. A length of the second glue portion 32 is L₃, and L₃ is equal to l₃. For example, L₃ may be 0.6 mm. In some other implementations, L₃ may alternatively be less than l₁. In other words, the length L₃ of the second glue portion 32 is less than or equal to the length l₃ of the bent tab portion 125.

In addition, a width of the second glue portion 32 is W₃, and W₃ is less than W₂ and equal to w₃. A left side surface (not marked in the figure) of the second glue portion 32 is retracted relative to the left side surface of the first glue portion 31 and is flush with the left side surface (not marked in the figure) of the bent tab portion 125. A right side surface (not marked in the figure) of the second glue portion 32 is retracted relative to the right side surface of the first glue portion 31 and is flush with the right side surface (not marked in the figure) of the bent tab portion 125.

In some other implementations, the left side surface of the second glue portion 32 may alternatively project relative to the left side surface of the bent tab portion 125 and the right side surface of the second glue portion 32 is retracted relative to the right side surface of the bent tab portion 125, or the left side surface of the second glue portion 32 may be retracted relative to the left side surface of the bent tab portion 125 and the right side surface of the second glue portion 32 projects relative to the right side surface of the bent tab portion 125, or W₃ may be greater than or equal to w₃.

It should be noted that, a qualifier such as "flush" and another relative positional relationship in embodiments of this application are all for the current process level, but not for absolute strict definitions in a mathematical sense. A small amount of deviation is allowed, and "approximately flush" is also acceptable. For example, that the left side surface of the second glue portion 32 is flush with the left side surface of the bent tab portion 125 means that the left side surface of the second glue portion 32 is flush with or approximately flush with the left side surface of the bent tab portion 125. For example, the left side surface of the second glue portion 32 may slightly project relative to the left side surface of the bent tab portion 125, or the left side surface of the second glue portion 32 may be slightly retracted relative to the left side surface of the bent tab portion 125.

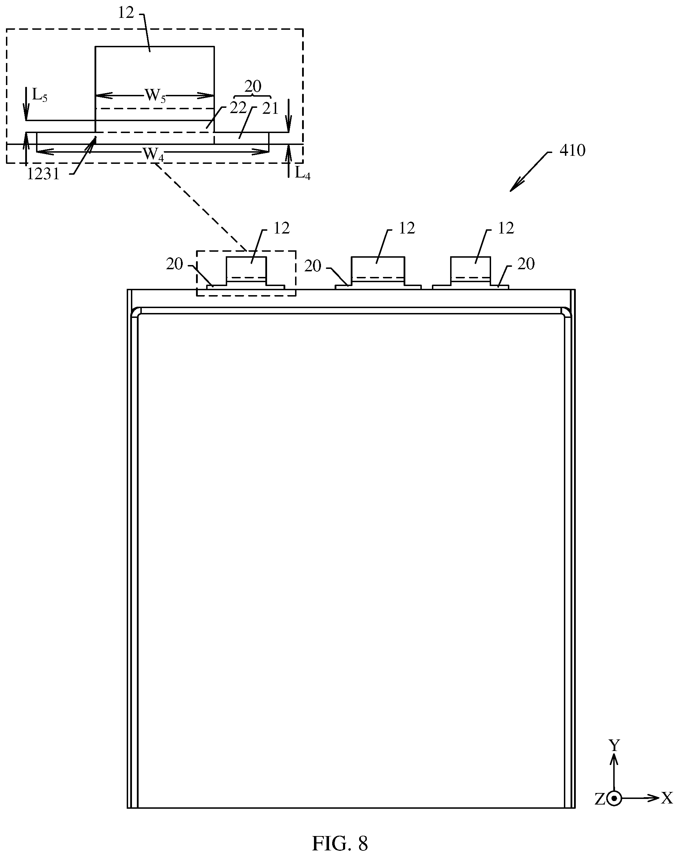

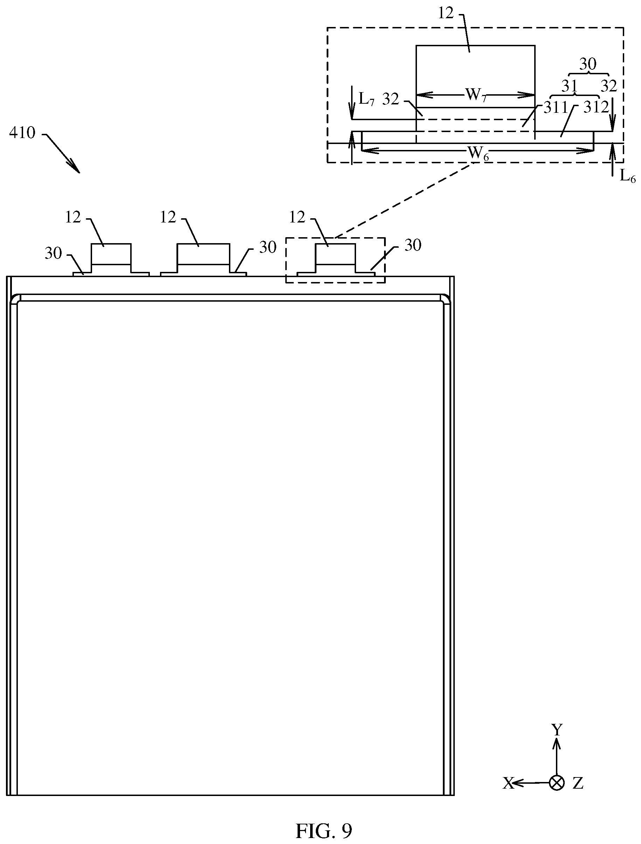

Refer to FIG. 8 and FIG. 9. FIG. 8 is a schematic diagram of a structure of the battery cell assembly 410 in the battery 400 shown in FIG. 3 in a second implementation. FIG. 9 is a schematic diagram of a structure of the battery cell assembly 410 shown in FIG. 8 from another perspective. The battery cell assembly 410 shown in FIG. 8 and FIG. 9 is not assembled with the protection board assembly 420. In this case, in the battery cell assembly 410, the tab 12 of the battery cell 10, the first tab glue 20, and the second tab glue 30 are in an unbent state.

The battery cell assembly 410 shown in this implementation is different from the battery cell assembly 410 shown in the foregoing implementation in that the first tab glue 20 is in an inverted "T" shape. In this implementation, the first tab glue 20 includes a first portion 21 and a second portion 22. The second portion 22 is located on a top side of the first portion 21 and is fastened to the first portion 21.

Further refer to FIG. 4. A length of the first portion 21 is L₄, and L₄ is less than to l₁. For example, L₄ may be 0.6 mm. In addition, a width of the first portion 21 is W₄, and W₄ is greater than w₁. A left side surface (not marked in the figure) of the first portion 21 projects relative to a left side surface (not marked in the figure) of the fixed tab portion 123, and a right side surface (not marked in the figure) of the first portion 21 projects relative to a right side surface (not marked in the figure) of the fixed tab portion 123. In some other implementations, the left side surface of the first portion 21 may alternatively not project relative to the left side surface of the fixed tab portion 123, or the right side surface of the first portion 21 may not project relative to the right side surface of the fixed tab portion 123, or W₄ may be less than or equal to w₁.

A length of the second portion 22 is L₅, L₅ is less than l₁, and a sum of L₅ and L₄ is equal to l₁. For example, L₅ may be 0.4 mm, or L₅ may be 0.6 mm. In some other implementations, the sum of L₅ and L₄ may be less than l₁. In addition, a width of the second portion 22 is W₅, and W₅ is less than W₄ and equal to w₁. A left side surface (not marked in the figure) of the second portion 22 is retracted relative to the left side surface of the first portion 21 and is flush with the left side surface of the fixed tab portion 123. A right side surface (not marked in the figure) of the second portion 22 is retracted relative to the right side surface of the first portion 21 and is flush with the right side surface of the fixed tab portion 123.

In some other implementations, the left side surface of the second portion 22 may alternatively project relative to the left side surface of the fixed tab portion 123 and the right side surface of the second portion 22 is retracted relative to the right side surface of the fixed tab portion 123, or the left side surface of the second portion 22 may be retracted relative to the left side surface of the fixed tab portion 123 and the right side surface of the second portion 22 projects relative to the right side surface of the fixed tab portion 123, or W₅ may be less than or greater than w₁.

Refer to FIG. 5 and FIG. 8. In this implementation, a first glue portion 31 of the second tab glue 30 is in an inverted "T" shape. The first glue portion 31 includes a first sub-glue portion 311 and a second sub-glue portion 312. The second sub-glue portion 312 is located on a top side of the first sub-glue portion 311 and is fastened to the first sub-glue portion 311.

A length of the first sub-glue portion 311 is L₆, and L₆ is less than l₁. For example, L₆ may be 0.6 mm. In addition, a width of the first sub-glue portion 311 is W₆, and W₆ is greater than w₁. A left side surface (not marked in the figure) of the first sub-glue portion 311 projects relative to the left side surface (not marked in the figure) of the fixed tab portion 123, and a right side surface (not marked in the figure) of the first sub-glue portion 311 projects relative to the right side surface (not marked in the figure) of the fixed tab portion 123. In some other implementations, the left side surface of the first sub-glue portion 311 may alternatively not project relative to the left side surface of the fixed tab portion 123, or the right side surface of the first sub-glue portion 311 may not project relative to the right side surface of the fixed tab portion 123, or W₆ may be less than or equal to w₁.

A length of the second sub-glue portion 312 is L₇, L₇ is less than l₁. and a sum of L₇ and L₆ is equal to l₁. For example, L₇ may be 0.6 mm. In some other implementations, the sum of L₇ and L₆ may be less than l₁. In addition, a width of the second sub-glue portion 312 is W₇, and W₇ is less than W₆ and equal to w₁. A left side surface (not marked in the figure) of the second sub-glue portion 312 is retracted relative to the left side surface of the first sub-glue portion 311 and is flush with the left side surface of the fixed tab portion 123. A right side surface (not marked in the figure) of the second sub-glue portion 312 is retracted relative to the right side surface of the first sub-glue portion 311 and is flush with the right side surface of the fixed tab portion 123.

In some other implementations, the left side surface of the second sub-glue portion 312 may alternatively project relative to the left side surface of the fixed tab portion 123 and the right side surface of the second sub-glue portion 312 is retracted relative to the right side surface of the fixed tab portion 123, or the left side surface of the second sub-glue portion 312 may be retracted relative to the left side surface of the fixed tab portion 123 and the right side surface of the second sub-glue portion 312 projects relative to the right side surface of the fixed tab portion 123, or W₇ may be less than or greater than w₁.

Further refer to FIG. 3. During assembly of the battery cell assembly 410 and the protection board assembly 420, the bent tab portion 125 of the tab 12 needs to be bent relative to the fixed tab portion 123 and the active tab portion 124, to be electrically connected to the protection board assembly 420. Because there is no tab glue on the inner side surface 1251 of the bent tab portion 125 in the tab 12, it is not only convenient to bend the bent tab portion 125 of the tab 12, to facilitate improvement of assembly convenience of the battery 400, but also can reduce space occupation of the tab glue on the surface of the bent tab portion 125 in the length direction of the battery 400, thereby avoiding space waste of the battery 400 in the length direction and facilitating improvement of a capacity of the battery 400. In this case, the second glue portion 32 is located between the first side surface 424 and the second side surface 425 of the protection circuit board 421. In other words, the second glue portion 32 does not project relative to the first side surface 424 of the protection circuit board 421, to ensure that a length of the battery cell assembly 410 satisfies a packaging specification of the protection circuit board 421 after the battery 400 is packaged.

In addition, because a left side surface of the second glue portion 32 in the second tab glue 30 is flush with a left side surface of the bent tab portion 125, and a right side surface of the second glue portion 32 is flush with a right side surface of the bent tab portion 125, in other words, the second glue portion 32 does not have any projected portion relative to the left side surface and the right side surface of the bent tab portion 125. When the bent tab portion 125 is bent relative to the fixed tab portion 123 and the active tab portion 124, the entire second glue portion 32 is bent along with the bent tab portion 125. No excess portion of the second glue portion 32 is raised relative to the bent tab portion 125 and occupies space in the length direction of the battery 400. This can also effectively avoid space waste of the battery 400 in the length direction and facilitate improvement of a capacity of the battery 400.

It should be noted that, in this implementation, the second tab glue 30 completely covers the outer side surface 1232 of the fixed tab portion 123 and the outer side surface 1252 of the bent tab portion 125. This can effectively protect an exposed portion of the tab 12, thereby preventing the tab 12 from contacting another component to cause a short circuit, and ensuring usage reliability of the battery 400. In some other implementations, the second tab glue 30 may alternatively be provided on the outer side surface 1232 of the fixed tab portion 123, and covers the outer side surface 1232 of the fixed tab portion 123. In this case, the outer side surface 1252 of the bent tab portion 125 is exposed relative to the second tab glue 30. In other words, the second tab glue 30 is not provided on the outer side surface 1252 of the bent tab portion 125. In other words, a tab glue is not provided on the outer side surface 1252 of the bent tab portion 125. In other words, the second tab glue 30 may alternatively only include the first glue portion 31 in the foregoing implementation. This can not only further facilitate bending of the bent tab portion 125 of the tab 12, but also further reduce space occupation of the second tab glue 30 in the length direction of the battery 400, and further improve a capacity of the battery 400.

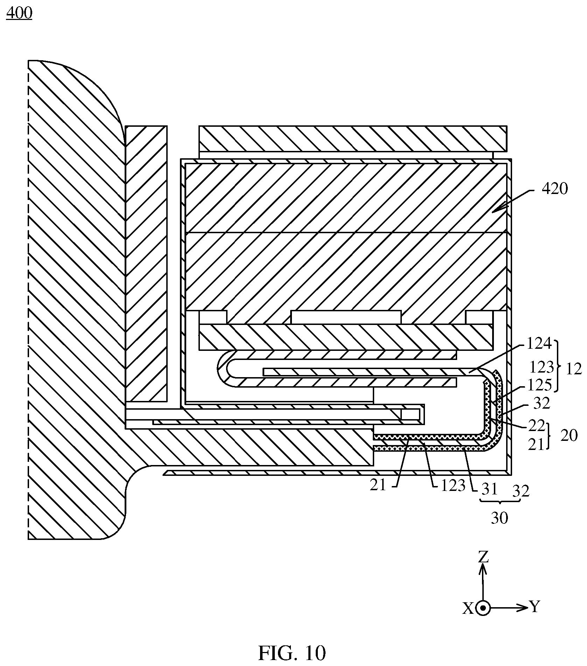

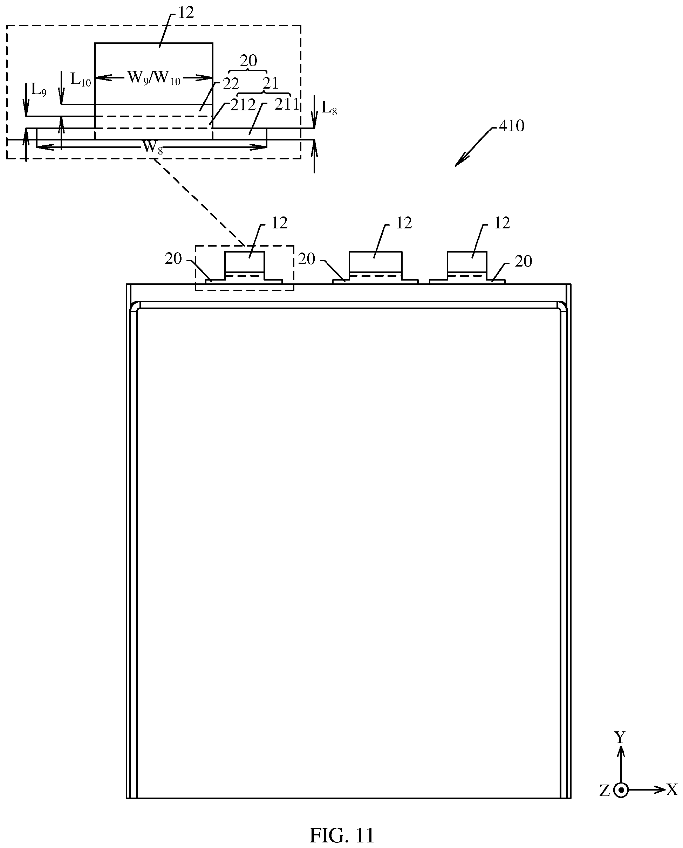

Refer to FIG. 10 and FIG. 11. FIG. 10 is a schematic diagram of a cross-sectional structure of a battery 400 in a second electronic device after being sectioned along I-I according to an embodiment of this application. FIG. 11 is a schematic diagram of a structure of a battery cell assembly 410 in the battery 400 shown in FIG. 10 in a first implementation. The battery cell assembly 410 shown in FIG. 11 is not assembled with a protection board assembly 420. In this case, in the battery cell assembly 410, a tab 12 of a battery cell 10, a first tab glue 20, and a second tab glue 30 are in an unbent state.

The battery 400 shown in this embodiment is different from the battery 400 shown in the foregoing embodiment in that the first tab glue 20 covers an inner side surface 1231 of a fixed tab portion 123 and an inner side surface 1251 of a bent tab portion 125, and covers the inner side surface 1231 of the fixed tab portion 123 and the inner side surface 1251 of the bent tab portion 125. For a structure of the second tab glue 30 and a matching relationship between the second tab glue 30 and the tab 12, refer to relevant descriptions of the second tab glue 30 shown in the second implementation of the first embodiment. This is not described again herein.

In this implementation, the first tab glue 20 is in an inverted "T" shape. The first tab glue 20 includes a first portion 21 and a second portion 22. The second portion 22 is located on a top side of the first portion 21 and is fastened to the first portion 21.

The first portion 21 is provided on the inner side surface 1231 of the fixed tab portion 123, and covers the inner side surface 1231 of the fixed tab portion 123. In this implementation, the first portion 21 is in an inverted "T" shape. The first portion 21 includes a first sub-portion 211 and a second sub-portion 212. The second sub-portion 212 is located on a top side of the first sub-portion 211 and is fastened between the first sub-portion 211 and the second portion 22.

A length of the first sub-portion 211 is L₈, and L₈ is less than l₁. For example, L₈ may be 0.6 mm. In addition, a width of the first sub-portion 211 is W₈, and W₈ is greater than w₁. A left side surface (not marked in the figure) of the first sub-portion 211 projects relative to a left side surface (not marked in the figure) of the fixed tab portion 123, and a right side surface (not marked in the figure) of the first sub-portion 211 projects relative to a right side surface (not marked in the figure) of the fixed tab portion 123. In some other implementations, the left side surface of the first sub-portion 211 may alternatively not project relative to the left side surface of the fixed tab portion 123, or the right side surface of the first sub-portion 211 may not project relative to the right side surface of the fixed tab portion 123, or W₈ may be less than or equal to W₁.

A length of the second sub-portion 212 is L₉, L₉ is less than l₁, and a sum of L₉ and L₈ is equal to l₁. For example, L₉ may be 0.6 mm. In some other implementations, the sum of L₉ and L₈ may be less than l₁. In addition, a width of the second sub-portion 212 is W₉, and W₉ is less than W8 and equal to w₁. A left side surface (not marked in the figure) of the second sub-portion 212 is retracted relative to the left side surface of the first sub-portion 211 and is flush with the left side surface of the fixed tab portion 123. A right side surface (not marked in the figure) of the second sub-portion 212 is retracted relative to the right side surface of the first sub-portion 211 and is flush with the right side surface of the fixed tab portion 123.

In some other implementations, the left side surface of the second sub-portion 212 may alternatively project relative to the left side surface of the fixed tab portion 123 and the right side surface of the second sub-portion 212 is retracted relative to the right side surface of the fixed tab portion 123, or the left side surface of the second sub-portion 212 may be retracted relative to the left side surface of the fixed tab portion 123 and the right side surface of the second sub-portion 212 projects relative to the right side surface of the fixed tab portion 123, or W₉ may be less than or greater than w₁.

The second portion 22 is fastened to an end that is of the second sub-portion 212 and that is away from the first sub-portion 211. Specifically, the second portion 22 is provided on the inner side surface 1251 of the bent tab portion 125, and covers the inner side surface of the bent tab portion 125. In this implementation, the second portion 22 is in a "straight-line" shape. A length of the second portion 22 is L₁₀, and L₁₀ is equal to l₁₀. For example, L₁₀ may be 0.6 mm. In some other implementations, L₁₀ may alternatively be less than l₁. In other words, the length L₁₀ of the second portion 22 is less than or equal to the length l₁₀ of the bent tab portion 125.

In addition, a width of the second portion 22 is W₁₀, and W₁₀ is less than W₈ and equal to W₈ and w₃. A left side surface (not marked in the figure) of the second portion 22 is retracted relative to the left side surface of the first sub-portion 211 and is flush with the left side surface of the second sub-portion 212 and the left side surface (not marked in the figure) of the bent tab portion 125. A right side surface (not marked in the figure) of the second portion 22 is retracted relative to the right side surface of the first sub-portion 211 and is flush with the right side surface of the second sub-portion 212 and the right side surface (not marked in the figure) of the bent tab portion 125. In some other implementations, the left side surface of the second portion 22 may alternatively be retracted relative to the left side surface of the bent tab portion 125, or the right side surface of the second portion art 22 is retracted relative to the right side surface of the bent tab portion 125, or W₁₀ may be greater than or equal to w₃.

Further refer to FIG. 10. During assembly of the battery cell assembly 410 and the protection board assembly 420, the bent tab portion 125 of the tab 12 needs to be bent relative to the fixed tab portion 123 and the active tab portion 124 to be electrically connected to the protection board assembly 420. Because the second portion 22 in the first tab glue 20 and the second glue portion 32 in the second tab glue 30 does not project relative to the left side surface and the right side surface of the bent tab portion 125, when the bent tab portion 125 is bent relative to the fixed tab portion 123 and the active tab portion 124, both the second portion 22 and the second glue portion 32 are bent along with the bent tab portion 125. No excess portion of both the second portion 22 and the second glue portion 32 is raised relative to the bent tab portion 125 and occupies space in the length direction of the battery 400. This can effectively avoid space waste of the battery 400 in the length direction and facilitate improvement of a capacity of the battery 400.

In addition, in this implementation, the first tab glue 20 completely covers the inner side surface 1231 of the fixed tab portion 123 and the inner side surface of the bent tab portion 125. The second tab glue 30 completely covers the outer side surface 1232 of the fixed tab portion 123 and the outer side surface 1252 of the bent tab portion 125. This can effectively protect the fixed tab portion 123 and the bent tab portion 125 in the tab 12, thereby preventing the tab 12 from contacting another component to cause a short circuit, and ensuring effective use of the battery 400.

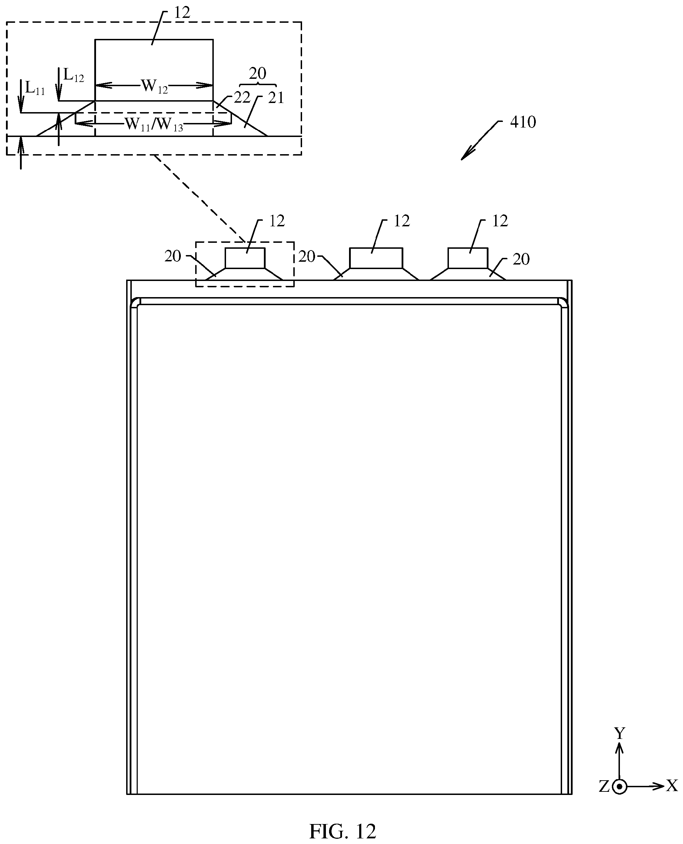

Refer to FIG. 4 and FIG. 12. FIG. 12 is a schematic diagram of a structure of the battery cell assembly 410 in the battery 400 shown in FIG. 10 in a second implementation. The battery cell assembly 410 shown in FIG. 12 is not assembled with the protection board assembly 420. In this case, in the battery cell assembly 410, the tab 12 of the battery cell 10, the first tab glue 20, and the second tab glue 30 are in an unbent state.

The battery cell assembly 410 shown in this implementation is different from the battery cell assembly 410 shown in the first implementation in that the first tab glue 20 and the second tab glue 30 are both trapezoidal. In the first tab glue 20, the first portion 21 and the second portion 22 are both trapezoidal. Widths of the first portion 21 and the second portion 22 gradually increase along a direction (a negative direction of a Y axis in the figure) of the second portion 22 toward the first portion 21.

A minimum width of the first portion 21 is W₁₁, and W₁₁ is greater than w₁. A left side surface (not marked in the figure) of the first portion 21 projects relative to a left side surface of the fixed tab portion 123, and a right side surface (not marked in the figure) of the first portion 21 projects relative to a right side surface of the fixed tab portion 123. An included angle between the left side surface of the first portion 21 and the left side surface of the fixed tab portion 123 is θ₁. An included angle between the right side surface of the first portion 21 and the right side surface of the fixed tab portion 123 is θ₂. Both θ₁ and θ₂ are acute angles. For example, θ₁ is equal to θ₂.

A minimum width of the second portion 22 is W₁₂, and W₁₂ is less than W₁₁ and equal to w₁. A maximum width of the second portion 22 is W₁₃, and W₁₃ is greater than W₁₂ and equal to W₁₁. A left side surface (not marked in the figure) of the second portion 22 projects relative to a left side surface of the bent tab portion 125, and is flush with the left side surface of the first portion 21. A right side surface (not marked in the figure) of the second portion 22 projects relative to a right side surface of the bent tab portion 125, and is flush with the right side surface of the first portion 21. Specifically, an end that is of the left side surface of the second portion 22 and that is away from the first portion 21 is connected to the left side surface of the bent tab portion 125. An end that is of the left side surface of the second portion 22 and that is close to the first portion 21 is connected to the left side surface of the first portion 21. An end that is of the right side surface of the second portion 22 and that is away from the first portion 21 is connected to the right side surface of the bent tab portion 125. An end that is of the right side surface of the second portion 22 and that is close to the first portion 21 is connected to the right side surface of the first portion 21. An included angle between the left side surface of the second portion 22 and the left side surface of the bent tab portion 125 is θ₃. An included angle between the right side surface of the second portion 22 and the right side surface of the bent tab portion 125 is θ₄. Both θ₃ and θ₄ are acute angles. For example, θ₃ is equal to θ₁, and θ₄ is equal to θ₂.

It should be noted that, in this implementation, for a structure of the second tab glue 30 and a matching relationship between the second tab glue 30 and the tab 12, refer to relevant descriptions of the first tab glue 20. This is not described again herein.

Further refer to FIG. 10. During assembly of the battery cell assembly 410 and the protection board assembly 420, the bent tab portion 125 of the tab 12 needs to be bent relative to the fixed tab portion 123 and the active tab portion 124, to be electrically connected to the protection board assembly 420. Because the second portion 22 in the first tab glue 20 and the second glue portion 32 in the second tab glue 30 project less relative to the left side surface and the right side surface of the bent tab portion 125, when the bent tab portion 125 is bent relative to the fixed tab portion 123 and the active tab portion 124, both the second portion 22 and the second glue portion 32 are bent along with the bent tab portion 125. No excess portion of both the second portion 22 and the second glue portion 32 is raised relative to the bent tab portion 125 and occupies space in the length direction of the battery 400. This can effectively avoid space waste of the battery 400 in the length direction and facilitate improvement of a capacity of the battery 400.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Embodiments of this application and features in embodiments may be mutually combined in a case that no conflict occurs. Therefore, the protection scope of this application shall be subject to the protection scope of the claims.

## Claims

1. A battery cell assembly, comprising a battery cell and a first tab glue, wherein the battery cell comprises a battery cell body and a tab, the tab extends relative to the battery cell body, and the tab comprises a fixed tab portion and a bent tab portion, wherein the fixed tab portion is fastened to the battery cell body, the bent tab portion is fastened to an end that is of the fixed tab portion and that is away from the battery cell body, the first tab glue is provided on an inner side surface of the fixed tab portion, and an inner side surface of the bent tab portion is exposed relative to the first tab glue.

2. The battery cell assembly according to claim 1, wherein the battery cell assembly further comprises a second tab glue, the second tab glue is provided on an outer side surface of the fixed tab portion, and an outer side surface of the bent tab portion is exposed relative to the second tab glue.

3. The battery cell assembly according to claim 1, wherein the battery cell assembly further comprises a second tab glue, the second tab glue is provided on an outer side surface of the fixed tab portion and an outer side surface of the bent tab portion.

4. The battery cell assembly according to claim 3, wherein the second tab glue comprises a first glue portion and a second glue portion, the first glue portion is provided on the outer side surface of the fixed tab portion, the second glue portion is fastened to the first glue portion and is provided on the outer side surface of the bent tab portion, a left side surface of the second glue portion is flush with a left side surface of the bent tab portion, and a right side surface of the second glue portion is flush with a right side surface of the bent tab portion.

5. The battery cell assembly according to claim 4, wherein the first glue portion comprises a first sub-glue portion and a second sub-glue portion, the first sub-glue portion is provided on the outer side surface of the fixed tab portion, a left side surface of the first sub-glue portion projects relative to a left side surface of the fixed tab portion, and/or a right side surface of the first sub-glue portion projects relative to a right side surface of the fixed tab portion; and
the second sub-glue portion is fastened between the first sub-glue portion and the second glue portion and is provided on the outer side surface of the fixed tab portion, a left side surface of the second sub-glue portion is flush with the left side surface of the fixed tab portion, and/or a right side surface of the second sub-glue portion is flush with the right side surface of the fixed tab portion.

6. The battery cell assembly according to claim 3, wherein the second tab glue comprises a first glue portion and a second glue portion, the first glue portion is provided on the outer side surface of the fixed tab portion, the second glue portion is fastened to the first glue portion and is provided on the outer side surface of the bent tab portion, and a width of the second glue portion gradually increases along a direction from the second glue portion to the first glue portion;
an included angle between a left side surface of the second glue portion and a left side surface of the bent tab portion is an acute angle, an included angle between a right side surface of the second glue portion and a right side surface of the bent tab portion is an acute angle, or a right side surface of the second glue portion is flush with a right side surface of the bent tab portion; or
a right side surface of the second glue portion is flush with a right side surface of the bent tab portion, and an included angle between the right side surface of the second glue portion and the right side surface of the bent tab portion is an acute angle.

7. The battery cell assembly according to any one of claims 1 to 6, wherein a left side surface of the first tab glue projects relative to the left side surface of the fixed tab portion, and/or a right side surface of the first tab glue projects relative to the right side surface of the fixed tab portion.

8. The battery cell assembly according to any one of claims 1 to 6, wherein the first tab glue comprises a first portion and a second portion, the first portion is provided on the inner side surface of the fixed tab portion, a left side surface of the first portion projects relative to the left side surface of the fixed tab portion, and/or a right side surface of the first portion projects relative to the right side surface of the fixed tab portion; and
the second portion is fastened to a top side of the fixed tab portion and is provided on the inner side surface of the fixed tab portion, a left side surface of the second portion is flush with the left side surface of the fixed tab portion, and/or a right side surface of the second portion is flush with the right side surface of the fixed tab portion.

9. The battery cell assembly according to any one of claims 1 to 8, wherein a quantity of tabs is two, both the two tabs extend relative to the battery cell body and are spaced apart from each other, and one is a positive tab and the other is a negative tab; and
a quantity of first tab glues is two, the two first tab glues are respectively provided on inner side surfaces of two fixed tab portions, and inner side surfaces of bent tab portions are each exposed relative to the first tab glue.

10. The battery cell assembly according to claim 9, wherein the battery cell comprises an electrode unit and a packaging film, the packaging film covers an outer surface of the electrode unit, and the electrode unit comprises a plurality of positive electrode sheets, a plurality of negative electrode sheets, and a plurality of separators, wherein the plurality of positive electrode sheets and the plurality of negative electrode sheets are alternately stacked, each separator is located between a positive electrode sheet and a negative electrode sheet, positive tab portions of the plurality of positive electrode sheets are electrically connected to form the positive tab, and negative tab portions of the plurality of negative electrode sheets are electrically connected to form the negative tab.

11. The battery cell assembly according to any one of claims 1 to 8, wherein a quantity of tabs is three, all the three tabs extend relative to the battery cell body and are arranged at intervals, and the tabs are a positive tab, a negative tab, and a reference tab, respectively; and
a quantity of first tab glues is three, the three first tab glues are respectively provided on inner side surfaces of three fixed tab portions, and inner side surfaces of bent tab portions are each exposed relative to the first tab glue.

12. A battery cell assembly, comprising a battery cell and a first tab glue, wherein the battery cell comprises a battery cell body and a tab, the tab extends relative to the battery cell body, the tab comprises a fixed tab portion and a bent tab portion, the fixed tab portion is fastened to the battery cell body, the bent tab portion is fastened to an end that is of the fixed tab portion and that is away from the battery cell body, and the first tab glue comprises a first portion and a second portion, wherein the first portion is provided on an inner side surface of the fixed tab portion, the second portion is fastened to a top side of the first glue portion and is provided on an inner side surface of the bent tab portion, a left side surface of the second portion is flush with a left side surface of the bent tab portion, and a right side surface of the second portion is flush with a right side surface of the bent tab portion.

13. A battery cell assembly, comprising a battery cell and a first tab glue, wherein the battery cell comprises a battery cell body and a tab, the tab extends relative to the battery cell body, the tab comprises a fixed tab portion and a bent tab portion, the fixed tab portion is fastened to the battery cell body, the bent tab portion is fastened to an end that is of the fixed tab portion and that is away from the battery cell body, and the first tab glue comprises a first portion and a second portion, wherein the first portion is provided on an inner side surface of the fixed tab portion, the second portion is fastened to a top side of the first portion and is provided on an inner side surface of the bent tab portion, and a width of the second portion gradually increases along a direction from the second portion to the first portion; and
an included angle between a left side surface of the second portion and a left side surface of the bent tab portion is an acute angle, an included angle between a right side surface of the second portion and a right side surface of the bent tab portion is an acute angle, or a right side surface of the second portion is flush with a right side surface of the bent tab portion; or
a right side surface of the second portion is flush with a right side surface of the bent tab portion, and an included angle between the right side surface of the second portion and the right side surface of the bent tab portion is an acute angle.

14. A battery, comprising the battery cell assembly according to any one of claims 1 to 13 and a protection circuit board, wherein the tab further comprises an active tab portion, the active tab portion is fastened to an end that is of the bent tab portion and that is away from the fixed tab portion, the bent tab portion is in a bent state, the fixed tab portion is spaced apart and arranged opposite to the active tab portion, and the protection circuit board is located on a side that is of the active tab portion and that is away from the fixed tab portion and is electrically connected to the active tab portion.

15. The battery according to claim 14, wherein a length of the protection circuit board is less than or equal 3.5 mm.

16. An electronic device, comprising a housing and the battery according to claim 14 or 15, wherein the battery is mounted on an inner side of the housing.
